# EUROPEAN PATENT APPLICATION

(11) **EP 1 091 309 A2**
(43) Date of publication of application: **11.04.2001**
(21) Application number: 00308687.3
(22) Date of filing: 03.10.2000
(51) Int. Cl.: G06F 17/60

(54) **Product registration method and apparatus**

(30) Priority: 08.10.1999 US 415335
(71) Applicant: LUCENT TECHNOLOGIES INC., Murray Hill, New Jersey 07974-0636 (US)
(72) Inventor: Botzas, Anthony, Allentown, Pennsylvania 18103 (US)
(74) Representative: Watts, Christopher Malcolm Kelway, Dr.

(57) **Abstract**

According to one embodiment of the invention, an electronic registration device includes a memory adapted to store consumer specific information and product specific information. The device also includes an interrogation unit adapted to prompt a product for product specific information and forward received product specific information to the memory. Further, this exemplary device includes a manufacturer signaling unit adapted to issue a communication signal to a manufacturer, wherein the communication signal includes consumer specific information and product specific information. In a particular example, the electronic registration device is a cordless telephone, and the interrogation unit is located within a handset of the cordless telephone and the manufacturer signaling unit is located in a base unit of the cordless telephone. According to another embodiment of the invention, a product is adapted for electronic registration. The product includes a memory adapted to store product specific information, and an interrogation response unit adapted to respond to an interrogation by communicating the product specific information. In one example, the interrogation response unit comprises a wireless transceiver. In yet another embodiment according to the invention, a method of registering a product includes the steps of electronically interrogating the product for product specific information, and communicating the product specific information to a manufacturer of the product.

## Description

### Field of the Invention:

The invention is related to the field of product registration, and in particular to a method and apparatus of automatically registering products.

### Background of the Invention:

Virtually every time a consumer purchases a non-perishable product, such as a home appliance (e.g., toaster, blender, etc.) or home electronics device (e.g., television, stereo, electronic game system, etc.), the contents of the package containing the product include a postcard to be filled in and mailed by the consumer in order to register the product with the manufacturer. The advertised purpose of this registration process is to enable the consumer to initiate and take advantage of a warranty provision associated with the product. Additional objectives of this process include the opportunity for the manufacturer to add the consumer to a mailing list for advertisements of like or related products, and to enable the manufacturer to readily contact the consumer in the case of a product recall.

The aforementioned process is flawed, however, in that it is too complex and time consuming, such that many consumers do not take the time to appropriately register their products. There is a need, therefore, for a simpler method of registering products. In particular, there is a need for a method and associated apparatus to enable automatic registration of products.

### Summary of the Invention:

This need is met, according to one embodiment of the invention, by an electronic registration device. In one exemplary embodiment, the device according to the invention includes a memory adapted to store consumer specific information and product specific information. The device also includes an interrogation unit adapted to prompt a product for product specific information and forward received product specific information to the memory. Further, this exemplary device includes a manufacturer signaling unit adapted to issue a communication signal to a manufacturer, wherein the communication signal includes consumer specific information and product specific information. In a particular example, the electronic registration device is a cordless telephone, and the interrogation unit is located within a handset of the cordless telephone and the manufacturer signaling unit is located in a base unit of the cordless telephone.

According to another embodiment of the invention, a product is adapted for electronic registration. The product includes a memory adapted to store product specific information, and an interrogation response unit adapted to respond to an interrogation by communicating the product specific information. In one example, the interrogation response unit comprises a wireless transceiver.

In yet another embodiment according to the invention, a method of registering a product includes the steps of electronically interrogating the product for product specific information, and communicating the product specific information to a manufacturer of the product.

### Brief Description of the Drawing:

Objects and advantages of the various embodiments of the invention will be apparent to one of skill in the art upon review of the following detailed description in light of the drawing, wherein:
Figure 1 is simplified block diagram of an exemplary electronic registration device according to the invention;
Figure 2 is a simplified block diagram of an electronic registration device according to the invention incorporated into a cordless telephone;
Figure 3 is a simplified operational flowchart for an electronic registration device according to the invention;
Figure 4 is an alternative simplified operational flowchart for an electronic registration device incorporated into a telephone according to the invention; and
Figure 5 is another simplified operational flowchart for an electronic registration device incorporated into a pager.

### Detailed Description:

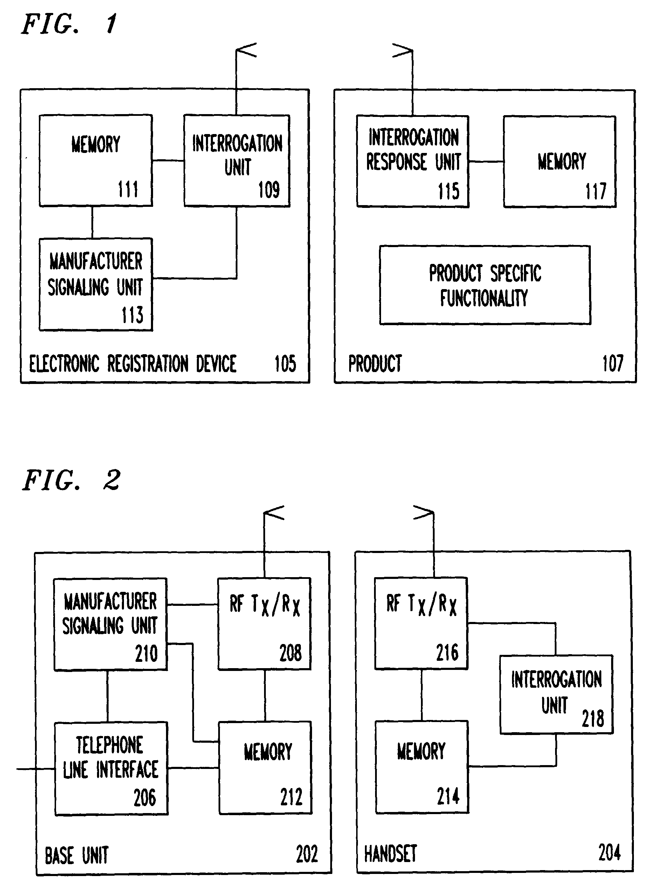

Figure 1 is a simplified block diagram of an exemplary electronic registration device 105 and an exemplary product 107 according to the invention. Electronic registration device 105 includes an interrogation unit 109, a memory 111 and a manufacturer signaling unit 113. Product 107 includes interrogation response unit 115 and memory 117. Product 107 also includes product specific functionality 119, which need not be coupled to the interrogation response unit 115 and the memory 117. For example, if product 107 is a blender, then the product specific functionality includes the conventional portions of a blender that make it perform its intended purpose (e.g., motor, blades, handle, etc.) and thus make it a product that is desirable to a consumer.

Operationally, interrogation unit 109 of electronic registration device 105 prompts the interrogation response unit 115 of the product 107. In response, the interrogation response unit 115 obtains product specific information, such as a serial number, a lot number, a location of manufacture, an identification of the individuals who manufactured and/or inspected the product, etc. from the memory 117, and communicates this product specific information to the interrogation unit 109, which forwards it to memory 111 of electronic registration device 105.

The manufacturing signaling unit 113 of electronic registration device 105 issues a communication signal to a manufacturer of the product 107. The communication signal contains some, or all, of the product specific information stored in memory 111. The term "manufacture" is used herein to denote any party in a supply chain of the product 107, or any party having an interest of any sort in the product. Thus, for example, the communication signal may be sent to the company that built the product. Alternatively, it may be sent to an organization that imported the product, an organization that sold the product to the consumer, an organization that distributed the product, an organization that advertised the product, an organization that sponsored the product, an organization that supplied components for inclusion in the product, an organization that is responsible for maintaining the product, or any combination thereof.

The product specific information may be stored in memory 117 by any manufacturer along the supply chain. Further, different pieces of the product specific information may be stored by different manufacturers as the product 107 passes through the supply chain. To facilitate this process, an original manufacturer may incorporate memory 117 into the product 107 as a read/write memory, and provide other manufacturers with instructions, code words, and/or physical means, etc. to write information to memory 117. There are various ways for one of skill in the art to write to memory 117, depending on its composition, any of which may be employed as part of the present invention.

Further, different communications may be provided to each "manufacturer". Thus, for example, a first communication signal containing a first subset of the product specific information may be sent to a first manufacturer, while a second communication signal containing a second subset of the product specific information is sent to a second manufacturer.

The communication signal may also include consumer specific information, such as a name, address and/or telephone number of the consumer. If multiple communication signals are issued, it is possible to have some include some or all of the consumer specific information, while others do not include any of the consumer specific information.

In one particular example, the communication signal comprises a telephone call. Alternatively, the communication signal may be a paging signal, a cellular telephone call, an electronic mail, or any other internet-based method of communication.

Interrogation unit 109 and interrogation response unit 115 may be configured to communicate according to a wireless communications standard. For example, interrogation unit 109 and interrogation response unit 115 may be transceivers configured according to the Bluetooth standard. The Bluetooth standard is an exemplary industry standard for wireless communications, principally sponsored by Ericsson, IBM, Nokia, Intel and Toshiba, and incorporated herein by reference.

Electronic registration device 105 may be a device particularly created to perform the functionality of the invention. Alternatively, electronic registration device 105 may be integrated into a device having an alternative function, such as a mouse, joystick, keyboard, etc. of a computer, a two-way pager, a cellular telephone, a conventional telephone, or a cordless telephone, such as in a handset thereof.

Figure 2 provides a simplified block diagram of an exemplary embodiment of the invention wherein electronic registration device 105 is incorporated into a cordless telephone. In this particular example, the cordless telephone comprises base unit 202 and handset 204. Base unit 202 includes a telephone line interface 206 and an RF transceiver 208, which are conventional elements of a cordless telephone base unit. Base unit 204 also includes other conventional elements of a cordless telephone, which are known to one of skill in the art and are thus not enumerated here.

Base unit 202 also includes a manufacturer signaling unit 210, and may also include a memory 212. The memory 210 may be configured to include consumer specific information, such as name, address, telephone number, demographics of the family, etc., and also is configured to store product specific information. The memory may also be configured to support conventional cordless telephone functions, such as the storage of messages as part of a telephone answering device.

The handset 204 may also include a memory 214, although it should be apparent to one of skill in the art that the telephone according to the invention may be configured with only one of memory 212 and 214, as the locus of storage between the base unit 202 and the handset 204 may be a matter of design choice. In addition, handset 204 includes a conventional RF transceiver 216 (as well as other conventional elements not shown here) and interrogation unit 218, which may be, for example, a wireless transceiver, such as a Bluetooth transceiver.

Operationally, the interrogation unit 218 prompts a product for product specific information and causes the responding information to be stored in memory 214 and/or memory 212 (via an RF link between transceivers 208 and 216). Base unit 202 subsequently places a call via telephone line interface 206 and a network, such as the public switched telephone network, to one or more manufacturers, and provides product specific information and consumer specific information. If the information is stored in memory 214 of handset 204, then the base unit retrieves this information via the RF link while engaging in the telephone call via the telephone line interface 206.

The prompting by interrogation unit 218 may be performed based on user activation. For example, a keypad of handset 204 may include a particular button that is used exclusively for product registration. Alternatively, a series of buttons or other predefined activation sequence may be employed. Handset 204 and/or base unit 202 may also include an indicating element, such as an LCD display (which may also be used for conventional purposes, such as Caller ID display) to provide feedback to a user to let the user know that the registration process is occurring or is completed. For example, the display may indicate "REGISTERING" upon initial activation, may be updated to indicate "REGISTERING WITH TOASTER" upon receiving initial product specific information from the toaster, may be subsequently be updated to indicate "CALLING TOASTER MANUFACTURER" and "TOASTER REGISTRATION COMPLETE" at subsequent stages of the registration process. The visual feedback may be coupled with audible feedback, such as a "beep" to inform the user of a change in the display status, or with verbal feedback, including, for example, operational instructions, emanating from a conventional speaker integral to base unit 202 or handset 204.

The registration information may also be stored in memory 212 and/or 214 for subsequent review by the user, such as through a process similar to reviewing stored voice messages. For this purpose, a text-to-speech module may be included in one or both of the base unit 202 and handset 204, and may be configured as a module of a processor, such as a digital signal processor.

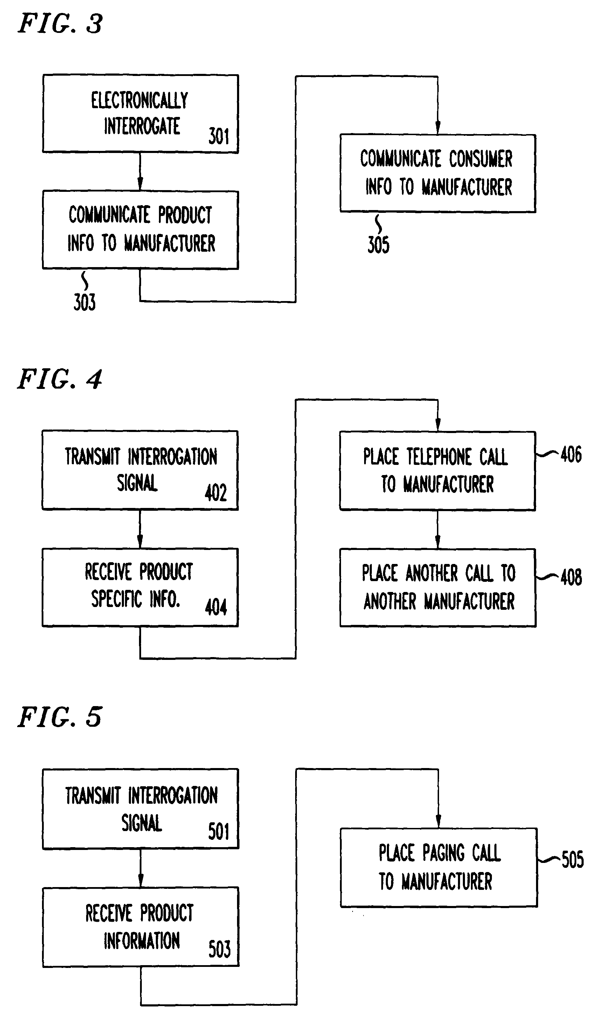

Figure 3 is a simplified operational flowchart for an electronic registration device according to the invention. At step 301, the electronic interrogation occurs, whereby the registration device prompts the product and the product responds with the product specific information. At step 303, the electronic registration device communicates the product specific information with the manufacturer(s), and at step 305, which may occur coincident with step 303, the electronic registration device communicates the consumer specific information with the manufacturer(s).

Figure 4 is a simplified operational flowchart for a specific example where the electronic registration device is a telephone, such as a cordless telephone. At step 402, a handset issues an interrogation signal. At step 404, product specific information is received from a product. At step 406, a base unit places a telephone call to a manufacturer and communicates at least some of the product specific and/or consumer specific information. Optionally, an additional call may be placed to an additional manufacturer at step 408.

Figure 5 is another simplified operational flowchart for a specific example where the electronic registration device is a pager. At step 501, the pager issues an interrogation signal, such as upon user activation. At step 503, the pager receives product specific information from a product, and at step 505 the pager places a paging call to a manufacturer. Of course, the pager may perform additional functions, such as displaying, providing audible feedback, etc., as discussed above with respect to telephonic applications.

The invention thus provides an efficient mechanism and method for use in registering product. This mechanism may be particularly advantageous at the time a new product is purchased, in that it enables a consumer to easily transfer both product specific and consumer specific information to one or more parties associated with the manufacture, distribution, sale or maintenance of the product. The invention may prove to be even more advantageous at a point in time when some of the consumer specific information changes, such as when the user relocates. In this example, upon moving to a new location, the user simply updates the consumer specific information to reflect the new name, address, etc., or if the consumer specific information is based on Caller ID data, then this update is performed automatically, and then the user can elect to automatically reregister products to inform the manufacture of the new consumer specific information. A similar process may be employed to update a manufacturer upon a change in title to a product, such as when the first consumer sells the product to a second consumer.

The invention thus provides various alternative embodiments by which automatic product registration may occur. The automatic registration process described above occurs in essentially one direction, i.e., from the product to the manufacturer. It is, of course, also possible to integrate bi-directional data transfer into the process, such as the communication of activation data or instructions from the manufacturer to the product based, for example, on the product registration. Communication associated with registration and activation may therefore be iterative with each step either occurring automatically or requiring user input.

Based on an understanding of these various embodiments, one of skill in the art is likely to conceive of alternative embodiments that are not specifically enumerated here, but that are clearly within the scope of the invention.

## Claims

1. An electronic registration device, comprising:
a memory adapted to store consumer specific information and product specific information;
an interrogation unit adapted to prompt a product for product specific information and forward received product specific information to the memory; and
a manufacturer signaling unit adapted to issue a communication signal to a manufacturer, wherein the communication signal includes consumer specific information and product specific information.

2. An electronic registration device as recited in claim 1, wherein the communication signal is a telephone call.

3. An electronic registration device as recited in claim 1, wherein the interrogation unit comprises a wireless transceiver.

4. An electronic registration device as recited in claim 3, wherein the wireless transceiver is adapted to communicate with the product in accordance with the Bluetooth standard.

5. An electronic registration device as recited in claim 1, wherein the electronic registration device comprises a telephone.

6. An electronic registration device as recited in claim 5, wherein the telephone is a cordless telephone, and wherein the interrogation unit is located within a handset of the cordless telephone and the manufacturer signaling unit is located in a base unit of the cordless telephone.

7. An electronic registration device as recited in claim 6, wherein the memory is located in the handset of the telephone.

8. An electronic registration device as recited in claim 6, wherein the memory is located in the base unit of the telephone.

9. An electronic registration device as recited in claim 5, wherein the telephone is a cellular telephone, such that the manufacturer signaling unit comprises a cellular transmitter.

10. An electronic registration device as recited in claim 1, wherein the electronic registration device comprises a pager, wherein the manufacturer signaling unit comprises two-way paging transmitter.

11. A product adapted for electronic registration, comprising:
a memory adapted to store product specific information; and
an interrogation response unit adapted to respond to an interrogation by communicating the product specific information.

12. A product as recited in claim 11, wherein the interrogation response unit comprises a wireless transceiver.

13. A product as recited in claim 12, wherein the wireless transceiver is adapted to communicate in accordance with the Bluetooth standard.

14. A product as recited in claim 12, wherein the product is further adapted to receive activation information from a manufacturer in response to the product specific information.

15. A method of registering a product, comprising the steps of:
electronically interrogating the product for product specific information; and
communicating the product specific information to a manufacturer of the product.

16. A method as recited in claim 15, further comprising the step of communicating consumer specific information to the manufacturer.

17. A method as recited in claim 15, further comprising the step of receiving activation information from the manufacturer.

18. A method as recited in claim 15, wherein the interrogating step comprises transmitting an interrogation signal from a wireless transceiver in a telephone and receiving product specific information from the product by the transceiver.

19. A method as recited in claim 18, wherein the wireless transceiver is a Bluetooth transceiver.

20. A method as recited in claim 16, wherein the steps of communicating the product specific information and the consumer specific information comprise placing a telephone call to the manufacturer and providing the information.

21. A method as recited in claim 20, wherein the consumer specific information comprises Caller ID data.

22. A method as recited in claim 16, wherein the steps of communicating the product specific information and the consumer specific information comprise sending a page to the manufacturer to provide the information.

23. A method as recited in claim 20, wherein the step of placing the telephone call comprises placing a first telephone call to a first manufacturer and placing a second telephone call to a second manufacturer.

24. A method as recited in claim 23, wherein a first set of information is provided to the first manufacturer and a second set of information is provided to the second manufacturer.
